# EUROPEAN PATENT APPLICATION

(11) **EP 2 799 255 A1**
(43) Date of publication of application: **05.11.2014**
(21) Application number: 11878697.9
(22) Date of filing: 27.12.2011
(51) Int. Cl.: B60C 11/04, B60C 1/00, B60C 11/13

(54) **TREAD FOR PNEUMATIC TIRE**

(71) Applicant: Compagnie Générale des Etablissements Michelin, 63000 Clermont-Ferrand (FR); MICHELIN Recherche et Technique S.A., 1763 Granges-Paccot (CH)
(72) Inventor: SHIMANAKA, Nanae, Kyoto 6008841 (JP); PAGANO, Salvatore, Clermont-Ferrand, Cedex 9, 63040 (FR); DAUTREY, Nicolas, Tokyo 1631073 (JP)
(74) Representative: Ribière, Joel
(86) International application number: PCT/JP2011/080333
(87) International publication number: WO 2013/098977

(57) **Abstract**

Provided is a tread for a pneumatic tyre with which water column resonance is reduced, drainage performance is maintained, and the flexible fences are worn to the same extent as the tread part. A tread 1 for a pneumatic tyre of the present invention is a tread that is formed by a rubber composition and that has a tread part 2 in which a main groove 3 is formed and multiple flexible fences 4 formed inside the main groove. The flexible fences are formed by at least a rubber composition for fences that is different from the rubber composition of the tread part. The rubber composition for fences comprises a filler composition the base of which is (a) diene elastomer, (b) 30 phr or more of a non-black reinforcing filler and less than 3 phr of carbon black as optional component, and (c) organic photo-oxidation catalyst.

## Description

### Technical Field

The present invention pertains to a tread for a pneumatic tyre, and in further detail, to a tread for a pneumatic tyre where air column resonance is reduced and water drainage is maintained by forming flexible fences that wear to the same extent as the tread in the main groove, as well as a pneumatic tyre having such a tread.

### Prior art

Air column resonance of the main groove formed in the tread of a tyre is generated by the intratubular (air column) resonance that is formed between this main groove and the road surface, and the resonant frequency is dependent on the length of the air column of the main groove formed with the road surface.

This air column resonance is manifested in the form of noise inside and outside a vehicle, and in many cases, it peaks at approximately 1 kHZ, which is audible to the human ear. Known technology for reducing this air column resonance of the main groove includes technology whereby so-called flexible fences, in other words, protrusions, that extend from the groove walls and groove base of the main groove and block all or the majority of the main groove are used to block the flow of air in the direction in which the main groove is formed and reduce air column resonance. Nevertheless, by blocking the flow of air in the direction in which the main groove is formed, the flow of water inside the main groove that has entered the main groove is also blocked when the vehicle travels on a wet road surface. Therefore, there is a reduction in drainage of water that is present between the pneumatic tyre and the road surface and as a result, there is a reduction in operation stability on the wet road surface.

Figure 4 of patent document 1 shows technology with which disposing at intervals three fence (flexible fence) groups 3 that extend from the opposing groove walls and groove base inside the main groove both reduces air column resonance and imparts drainage performance.

Moreover, Figure 3 of patent document 2 reveals technology with which disposing a partition 30 (flexible fence) that extends from the groove base inside a main groove such that the majority from the opening in the main groove does not contact the groove walls plays a role in both reducing air column resonance and imparting drainage performance.

### Prior art documents

### Patent documents

Patent Document 1: JP (Kokai) 11-105511
Patent document 2: JP 2006-341655

### Summary of invention

### Problems to be solved by invention

Nevertheless, by means of the technology disclosed in patent documents 1 and 2, the flexible fences are capable of deforming such that thickness in the direction of the tyre periphery becomes thinner such so that they function as flexible fences. Therefore, depending on the material that is used, the flexible fences do not wear as quickly as the tread part wears with repeated travelling of the vehicle, and this leads to a difference in the amount of wear between the flexible fences and the tread part. Due to this difference in the amount of wear, there is a problem in that the flexible fences project from the surface of the tread part (surface of the tread where a tread section contacts the ground) and abnormal sound is generated when the flexible fences that protrude from the tread surface of the tread part strike the tread section that contacts the ground when the vehicle travels. This generation of abnormal sound runs counter to the original role of the flexible fence of reducing the air column resonance and reducing noise.

Therefore, the present invention is intended to solve the problems encountered with the prior art, and its purpose is to provide a tread for a pneumatic tyre with which protrusion of the flexible fences from the tread part can be controlled while maintaining drainage performance.

### [Means for solving problems]

In order to accomplish the above-mentioned purpose, the present invention is a tread for a pneumatic tyre that comes into contact with the road surface while the tyre is rolling and that is formed from a rubber composition, the tread for a pneumatic tyre being characterized in comprising:
a tread part in which is formed at least one main groove having a base and 2 opposing side walls and depth D and width W and
multiple flexible fences that have thickness E extend within the main groove such that at least 70% of the cross sectional surface area of the main groove is blocked, and are disposed at intervals such that when the tyre is rolling at least one flexible fence is in the main groove in the tread section that contacts the ground,
wherein the multiple flexible fences are formed from at least a rubber composition for fences that is different from the rubber composition for the tread part, and the rubber composition for fences comprises a filler composition the base of which is
   (a) diene elastomer;
   (b) 30 phr or more of non-black reinforcing filler and less than 3 phr of carbon black as optional component; and
   (c) organic photo-oxidation catalyst.

According to the present invention configured in this way, when compared to the case where there are no flexible fences, the length of the air column of the main groove that is formed with the road surface is altered by flexible fences that are formed inside the main groove and that are disposed at intervals such that at least 70% of the cross sectional surface area of the main groove is blocked and at least one of the fences is in the main groove in the tread section that contacts the road when the tyre rolls. Thus, the peak of the air column resonance is outside a frequency band audible to the human ear and as a result, noise from the air column resonance is improved.

Furthermore, according to the present invention, the rubber composition for the fences comprises a photo-oxidation catalyst and therefore, the flexible fences will wear to the same extent as the tread part. That is, by means of the rubber composition for fences containing a photo-oxidation catalyst, photo-oxidation of a rubber composition is promoted by exposure to visible light having a wavelength near the ultraviolet region and as a result, wearing of the composition is increased.

Explained in further detail, when a flexible fence comes into direct contact with the road surface through the tread section that contacts the road, grounding pressure and sliding are generated between the road surface and the flexible fence by the counterforce that is received when the tip of the flexible fence contacts the road surface. According to the present invention, the rubber composition for fences comprises a filler composition the base of which is a diene elastomer, 30 phr or more of non-black reinforcing filler, less than 3 phr of carbon black as an optional component, and photo-oxidation catalyst. Therefore, the coefficient of abrasion of the rubber composition for fences is greater than the coefficient of abrasion of the rubber composition for the tread part. Consequently, even when the grounding pressure and sliding are reduced by the deformation of the flexible fences, the fences are effectively worn and as a result, the flexible fences can be worn to the same extent as the amount of wear of the tread part.

Here, the term "groove" refers to a space having width and depth that is formed when two opposing surfaces (walls) that do not contact one another under standard usage conditions are connected by another surface (base).

Moreover, the term "main groove" refers to any of a variety of grooves formed in a tread that are relatively wide and are primarily for draining of fluid. In most cases, the term main groove refers to a groove that extends in the tyre circumferential direction in linear form, zig-zag form, or undulated form, but it also includes grooves having a relatively wide width that extend at an angle to the direction of tyre rotation and are primarily for draining of fluid.

The term "tread section contacting the road" refers to the surface region of the tread that contacts the road surface when the tyre is placed on the applicable rim as specified by the following industrial standards and filled to the rated internal pressure and used under the rated load.

Moreover, the term "rated" means as specified by the industrial standards effective for the region where the tyre is produced or used. For instance, the industrial standards in Europe are the Standards Manual of the ETRTO (The European Tyre and Rim Technical Organization), in the United States are the "Year Book" of the Tyre and Rim Association Inc., and in Japan are the "JATMA Year Book" of the Japan Automobile Tyre Manufacturers Association (JATMA). Moreover, the term "applicable rim" means a rim specified in the standards in accordance with tyre size; the term "rated internal pressure" means the air pressure specified for the load capacity in these standards; and the "rated load" means the allowable maximum mass loaded on the tyre.

The term "wearing of the rubber composition" refers to the wear volume of the rubber composition by Aculon abrasion tests as determined in accordance with JIS K 6264-1 and JIS K6264-2. The wear volume of a rubber composition is found from the difference in the mass before and after operation in this test of a vulcanized rubber test piece using the Aculon abrasion testing device based on the above-mentioned standards. The number of rotations of the polishing wheel is set at 500 pre-operation rotations and 3000 test rotations, and the angle of inclination between the test piece and polishing wheel is set at 15 degrees. The test piece is pressed to the polishing wheel under added force of 27.0 N and the rotation speed of the test piece is 100 rotations per minute.

Moreover, the "coefficient of wearability" is the above-mentioned "wearing of the rubber composition" in coefficient form. The wear volume increases, that is, the wear speed becomes faster (there is a greater tendency towards wearing) as the numerical value of the coefficient increases. This "coefficient of wearability" is used in order to compare wearing of multiple rubber compositions. The coefficient of wearability is the numerical value that is obtained by converting the numerical value of a specific rubber composition to, for instance, 1.00 based on the results obtained in the above-mentioned abrasion tests and using this as the criterion, calculating the numerical value of a rubber composition to be compared by the same conversion rate. A numerical coefficient of wearability of 200% means that the rubber composition to be compared will wear twice as quickly as the standard rubber composition.

Moreover, the content of each structural component of the rubber composition is represented by phr (parts by mass per 100 parts by mass of elastomer or rubber). Furthermore, unless otherwise indicated, the ratio (percent, %) is the wt%; the interval represented by "between a and b" means greater than a but less than b (does not include the upper and lower limit numerical values); and the interval represented by "from a to b" means a or greater but b or less (includes the upper and lower limit numerical values).

Moreover, according to the present invention, preferably the diene elastomer is selected from the group consisting of polybutadienes (BR), polyisoprenes (IR), natural rubbers (NR), butadiene copolymers, isoprene copolymers, and mixtures of these elastomers.

Moreover, according to the present invention, preferably the organic photo-oxidation catalyst is particles, and more preferably microparticles.

According to the present invention, preferably the organic photo-oxidation catalyst is selected from the group consisting of radical-type and cation-type photoinitiators.

In addition, according to the present invention, preferably, the organic photo-oxidation catalyst is a cation-type photoinitiator.

Moreover, according to the present invention, preferably, the cation-type photoinitiator is an onium salt.

According to the present invention, preferably, the organic photo-oxidation catalyst is a radical-type photoinitiator.

In addition, according to the present invention, preferably, the radical-type photoinitiator is aromatic ketone.

In addition, according to the present invention, preferably, the aromatic ketone is selected from the group consisting of benzylketals, benzoins, α,α-dialkoxyacetophenones, α-hydroxyalkylphenones, α-aminoalkylphenones, acylphosphinoxides, benzophenone or thioxanthone with a hydrogen donor, and mixtures of these compounds.

Moreover, according to the present invention, preferably the amount of organic photo-oxidation catalyst is between 0.1 and 10 phr, further preferably between 0.2 and 5 phr, more preferably from 0.2 to 2 phr.

In addition, according to the present invention, preferably, the amount of carbon black as an optional component is less than 2 phr, particularly less than 1 phr.

According to the present invention, the non-black reinforcing filler is an inorganic non-black reinforcing filler.

According to the present invention, preferably the inorganic non-black reinforcing filler is selected from the group consisting of silica, alumina, aluminosilicate, and mixtures of these fillers.

In addition, according to the present invention, preferably the amount of filler for non-black reinforcing filler is between 20 phr and 120 phr, further preferably between 30 and 100 phr, more preferably from 40 phr to 90 phr.

According to the present invention, preferably the thickness of the flexible fence E is 0.3 mm or greater but 1.0 mm or less.

According to the present invention configured in this way, air column resonance is reduced, water drainage is guaranteed, and the flexible fences wear to the same extent as the tread part. That is, a flexible fence thickness of less than 0.3 mm can weaken the air column resonance-reducing effect because there is a possibility that the reduction in dimensional rigidity of the flexible fence will lead to collapse of the flexible fences under air pressure. Moreover, this type of collapsing leads to the flexible fence not making contact with the ground surface in the tread section that contacts the ground and therefore there is a chance that the speed with which the flexible fences wear will be greatly reduced versus the speed with which the tread part wears and the flexible fences will protrude from the tread part. On the other hand, when the thickness of the flexible fences is greater than 1.0 mm, the ratio of the opening in the cross section of the main groove when the flexible fence collapses to inside the main groove increases and there is a chance that drainage performance will decrease.

### Effect of Invention

By means of the pneumatic tyre tread of the present invention, water column resonance is reduced, drainage performance is maintained, and the flexible fences are worn to the same extent as the tread part.

### Brief Description of Drawings

[Figure 1] is a schematic drawing of the tread for a pneumatic tyre according to one embodiment of the present invention.
[Figure 2] is an enlarged cross section of a tread for a pneumatic tyre viewed along line II-II of Figure 1.
[Figure 3] is an enlarged cross section of a tread for a pneumatic tyre viewed along line III-III of Figure 1.
[Figure 4] is an enlarged cross section of the tread of the pneumatic tyre viewed along line II-II of Figure 1 similar to that shown in Figure 2, and is a schematic drawing when travelling on a wet road.
[Figure 5] is an enlarged cross section of the tread for a pneumatic tyre viewed along line III-III in Figure 1 similar to that shown in Figure 3 and is a schematic representation of the tyre travelling on a wet road surface.
[Figure 6] is an enlarged cross section of the tread for a pneumatic tyre viewed along line III-III of Figure 1 similar to that shown in Figure 3, and is a schematic representation of the tyre when the groove depth of the tread part has been worn approximately 30%.

### Embodiments of invention

Preferred embodiments of the present invention will now be described.

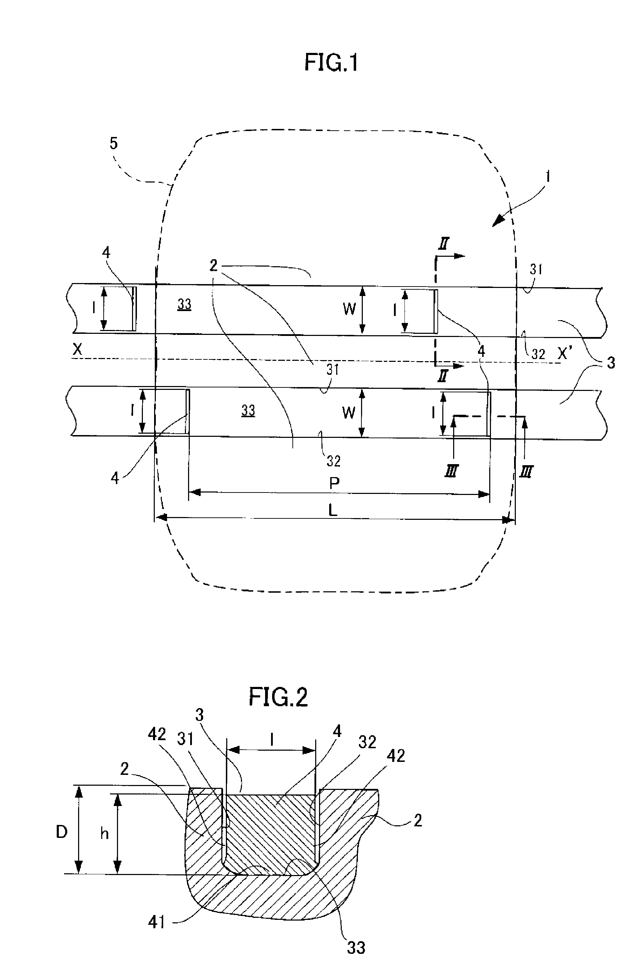

By means of the embodiments of the present invention, the rubber composition (rubber composition for fences) of the flexible fences 4 (refer to Figure 1, and the like described later) of tread 1 comprises a base that is at least diene elastomer, 30 phr or more of non-black reinforcing filler and less than 3 phr of carbon black as optional component; and organic photo-oxidation catalyst. First, each of these components will be described.

The diene elastomer will now be described.

The "diene" elastomer or rubber refers to an elastomer (or multiple elastomers) at least partially derived from a diene monomer (conjugated or unconjugated monomer having two carbon-carbon double bonds), that is, a homopolymer or copolymer.

Examples of these diene elastomers are polybutadienes (BR), polyisoprenes (IR), natural rubber (NR), butadiene copolymers, isoprene copolymers, and mixtures of these elastomers. Further preferred examples of diene elastomers are natural rubbers, polyisoprenes, polybutadienes wherein the cis-1,4 unit content exceeds 90%, butadiene/styrene copolymers, and mixtures of these elastomers.

Next, the non-black reinforcing filler will be described.

The term "non-black reinforcing filler" should be understood to mean an arbitrary inorganic filler regardless of colour or source (natural or synthetic) called an "inorganic" filler, "white" filler, or "transparent" filler, and further, actually an arbitrary organic filler other than carbon black.

The term "non-black filler" can be used alone to reinforce a rubber composition used to produce a tyre tread without means other than intermediate coupling agent. In other words, the non-black filler can be substituted as the reinforcement for tyre grade carbon black that is usually used in a tread. Such a filler generally is characterized by the presence of functional groups, that is, hydroxyl functional groups, at the surface as is common knowledge, and therefore, a coupling agent that imparts stable chemical bonds between the diene elastomer and this type of filler is necessary.

Preferably the non-black reinforcing filler is an inorganic filler, specifically a silica or alumina filler or a mixture of these two types of fillers.

The silica (SiO2) that is used can be an arbitrary precipitated or calcined silica having a BET surface area and specific CTAB surface area that are both less than 450 m2/g, preferably between 30 m2/g and 400 m2/g. Examples of highly dispersing precipitated silica (HDS) are Ultrasil 7000 silica made by Degussa, Zeosil 1165MP, 1135 MP, and 1115 MP silicas made by Rhodia; Hi-Sil EZ150G silica made by PPG; Zeopol 8715, 8745, and 8755 silicas made by Huber; and silicas disclosed in patent application WO 03/016387.

Preferably the reinforcing alumina used (Al2O3) is a highly dispersing aluminium having a BET surface area between 30 m2/g and 400 m2/g, more preferably between 60 m2/g and 250 m2/g, and an average grain size equal to 500 mm at most, preferably 200 nm at most. Nonrestricting examples of this type of reinforcing alumina are "Baikalox A125" or "CR125 (Baikowski), "APA-100RDX (Condea), "Aluminoxide C" (Degussa) and AKP-G015 (Sumitomo Chemicals).

In addition, other examples of inorganic fillers that can be used in the rubber composition of the embodiment of the present invention are aluminium (oxide) hydroxides, aluminosilicates, titanium oxides, silicon carbides or nitrides, and reinforcing types described in patent applications WO99/28376, WO 00/73372, WO 02/053634, WO 2004/003067, and WO 2004/056915.

According to the embodiment of the present invention, the non-black reinforcing filler that is used, that is, a silica reinforcing filler, preferably has a BET surface area between 60 m2/g and 350 m2/g. Preferably the present invention uses a reinforcing inorganic filler such as silica having a high BET specific surface area within a range of 130 m2g and 300 m2g, and this is based on the recognition that such a filler has high reinforcing capability. By means of another preferred embodiment of the present invention, a non-black filler showing a BET specific surface area of less than 130 m2/g, preferably between 60 m2/g and 130 m2/g, can be used (for instance, refer to WO 03/002648 and WO 03/002649).

The physical state of the non-black reinforcing filler (that is, inorganic filler) is not important and can be a powder, microbeads, particles, beads, or other appropriate density-imparting form. Of course, the term non-black reinforcing filler can be interpreted to mean any of various non-black reinforcing fillers, such as the above-mentioned high-dispersing silica and/or alumina filler.

A person skilled in the art would probably adjust the amount of non-black reinforcing filler in accordance with the properties of the filler used. Preferably the amount of non-black reinforcing filler, that is, inorganic non-black reinforcing filler, is between 20 phr and 120 phr, more preferably between 30 phr and 100 phr, further preferably within a range of from 40 phr to 90 phr.

According to the present specification, the BET specific surface area is measured in accordance with conventional method of gas adsorption using the Brunauer-Emmett-Teller method described in "The Journal of the American Chemical Society," vol. 60, page 309, February 1938, and in further detail, in accordance with the December 1996 French standards NF ISO 9277 (multi-point volumetric method (5 points), gases: nitrogen, degasification: 160°C for one hour, relative pressure range p/po: 0.05 to 0.17). The CTAB specific surface area is the outer surface area measured in accordance with November 1987 French standard NFT 45-007 (method B).

Finally, a person skilled in the art would understand that carbon black that has been coated by a non-black layer, in other words, an inorganic layer such as silica containing surface functional sites (in other words, hydroxyl sites) and requires the use of a coupling agent for bonding between the (particle surface of the) filler and the diene elastomer by a conventional method is the equivalent of the non-black reinforcing filler described herein.

The carbon black will now be described.

The rubber composition for fences according to the embodiments of the present invention optionally contains carbon black. That is, carbon black is an optional component of the rubber composition for fences.

When carbon black is present, as little carbon black as possible, usually less than 3 phr, preferably less than 2 phr, of carbon black is present. This amount of carbon black functions as an antagonist of the photo-oxidation catalytic effect based on its known UV stabilizing properties, that is, is the amount that can be used and still avoid unwanted effects. For this reason, the amount of carbon black is more preferably less than 1 phr. Within this narrow concentration range, the carbon black maintains the role of a black colouring agent for the composition, but does not act as a UV stabilizer. Any of the carbon blacks that play a role in black colouration of a rubber composition, that is HAF, ISAF, or SAF blacks that are known by a person skilled in the art to be normally used in tyres, are appropriate as the carbon black. Of these carbon blacks, examples are series 100, 200 or 300 (ASTM grade) reinforcing carbon blacks used in the tread of these tyres (such as N115, N134, N234, N326, N330, N339, N347, and N375), and further, 400 to 700 series non-reinforcing types (or nonstructured) (such as N660, N683), and N772 blacks) of a higher grade. Moreover, non-reinforcing blacks referred to as "ink blacks" that are used as black pigments in printing ink and paint can also be used.

The carbon black can be used alone as obtained industrially, or it can be used in another form, such as a medium for rubber industry additives.

Next, the photo-oxidation catalyst will be described.

The photo-oxidation catalyst used in the embodiment of the present invention is expected to promote and accelerate surface photo-oxidation of the rubber composition for fences used in fence group when the rubber composition is exposed to visible light of a wavelength similar to that of the UV region.

The organic photo-oxidation catalyst is a stable compound capable of releasing radicals or ions that promote or accelerate photo-oxidation with exposure to light of the appropriate wavelength.

Such an organic photo-oxidation catalyst is preferably formed from a radical-type or cation-type photoinitiator. This type of compound is generally used in the field of photopolymerization of polyfunctional monomers, surface treatment of a material using a protective coating, printing technology and electronics for manufacturing microcircuits.

A principal objective thereof for use in all these purposes is to promptly obtain a highly crosslinked polymer exhibiting high resistance against chemicals and necessary mechanical properties (for example, see J.V.Crivello and K.Dietliker, "Photoinitiators for free radical, cationic and anionic photopolymerisation", Vol. III, Chemistry and Technology of UV and EB Formulation for Coatings, Inks and Paint, John Wiley and Sons, SITA Technology Limited, 2nd edition, London 1998; E. Chesneau and J.P. Fouassier, "Polymerisation induite sous irradiation laser visible", ['Polymerization induced under laser-visible irradiation'], Die Angewandte Makromolekulare Chemie, 135, 1985, p. 41-64).

Examples of a cation-type photoinitiator include onium salts, and specific examples are sulphonium salts such as triarylsulphonium salts and iodonium salts such as diaryliodonium salts.

A preferably used photoinitiator is a radical-type photoinitiator, and a more preferably used photoinitiator is selected from aromatic ketones, which is in particular selected from the group consisting of benzylketals (particularly, diketals), benzoins (particularly, benzoin ethers), α,α-dialkoxyacetophenones, α-hydroxyalkylphenones, α-aminoaromatic ketones (or α-aminoalkylphenones), acylphosphinoxides, benzophenone or thioxanthones with a hydrogen donor (for example, tertiary amine), and mixtures of these compounds.

The above-mentioned organic photo-oxidation catalyst is preferably particles, more preferably microparticles.

As examples of the preferred radical photoinitiator, the following examples may be included:
- benzylketals and benzoin ethers: diphenylethanones and halogenated derivatives thereof (for example, 2-ethoxy-1,2-diphenylethanone, 2-isopropoxy-1,2-diphenylethanone, 2-isobutoxy-1,2-diphenylethanone, 2-butoxy-1,2-diphenylethanone, 2,2-dimethoxy-1,2-diphenylethanone or 2,2-diethoxy-1,2-diphenylethanone);
- α,α-dialkoxyacetophenones: α,α-diethoxyacetophenones and α,α-di(n-butoxy)acetophenone;
- α-hydroxyalkylphenones: 1-hydroxycyclohexylphenylketone, 2-hydroxy-2-methyl-1-phenylpropan-1-one, and 1-[4-(2-hydroxyethoxy)phenyl]-2-hydroxy-2-methylpropan-1-one;
- α-amino aromatic ketones: 2-methyl-1-[4-(methylthio)phenyl]-2-morpholinopropan-1-one and 2-benzyl-2-dimethylamino-1-(4-morpholinophenyl)butan-1-one;
- acylphosphinoxides: (2,4,6-trimethylbenzoyl)diphenylphosphinoxide, (2,4,6-trimethylbenzoyl)phenylphosphinic acid ethyl ester, and bis(2,4,6-trimethylbenzoyl)phenylphosphinoxide;
- benzophenones: 2,4,6-trimethylbenzophenone, 4-chlorobenzophenone, 4-methylbenzophenone, [4-(4-methylphenylthio)phenyl]phenylmethanone, 3,3'-dimethyl-4-methoxybenzophenone, methyl 2-benzoylbenzoate, 4-phenylbenzophenone, 4,4'-bis(dimethylamino)benzophenone, 4,4'-bis(diethylamino)benzophenone, benzylbenzophenone, and 4-phenylbenzophenone;
- thioxanthones: 2-isopropylthioxanthone, 4-isopropylthioxanthone, 2,4-dimethylthioxanthone, 2,4-diethoxythioxanthone, and 1-chloro-4-propoxythioxanthone;
- tertiary amines which may be used in combination with benzophenone or thioxanthones: methyldiethanolamine, triethanolamine, ethyl 4-(dimethylamino)benzoate, n-butoxyethyl 4-(dimethylamino)benzoate, isoacryl 4-(dimethylamino)benzoate, 2-(dimethylamino)ethyl benzoate, 1-(4-dimethylaminophenyl)ethanone, and 2-ethylhexyl 4-dimethylaminobenzoate.

The above-mentioned compounds are well-known compounds and are commercially available, and some of which are for example made commercially available by Ciba Inc. (Ciba Specialty Chemicals Inc.) under the trade name "IRGACURE" or "DAROCUR".

The photoinitiator can be used alone or in combination with a photosensitizer capable of activating the photo-oxidation effect unique to the photoinitiator.

Such a photo-sensitizer can be a pigment such as a phthalein (eosin, erythrocin, acyl eosin, floxine, Bengal rose) and thiazines (threonine and methylene blue). When used without a photosensitizer, the photoinitiator is selected such that the UV absorption spectrum and light source (natural or artificial) emission spectrum of the photoinitiator that participates in photo-oxidation of the fence groups obviously overlap.

A person skilled in the art will be able to adjust the amount of a photo-oxidation catalyst in the light of the following description. The amount is preferably between 0.1 phr and 10 phr, more preferably between 0.15 phr and 5 phr. When it is below the lower limit, there is a risk that the target technical effect is inadequate, while when it is above the upper limit suggested, there is a substantial increase in the cost. It has become clear that the reduced amount ranging from 0.2 phr to 2 phr is the appropriate amount for many examples.

It should be noted that preferably the rubber composition that forms the tread part does not contain the photo-oxidation catalyst that is used in the rubber composition for the fences.

Next, the rubber composition for fences will be described.

The rubber composition for fences according to an embodiment of the present invention can contain all or some of the conventional additives normally used in elastomer compositions used to produce treads, such as a plasticizer or filling oil (that latter is actually an aromatic or non-aromatic oil); a pigment; a preservative such as an anti-ozone wax, a chemical ozone-resistant agent, or an antioxidant (preferably retained within the rubber composition); an antifatigue agent; a reinforcing or plasticizer resin; a methylene receptor (such as phenol black resin) or methylene donor (such as HMT or H3M) such as described in patent application WO 02/10269, for instance; a crosslinking system wherein the base is sulphur or a sulphur donor and/or a peroxide and/or a bismaleimide; and a vulcanization accelerator or vulcanization activator.

Preferably, these compositions contain at least one compound selected from the group consisting of naphthene oils, paraffin oils, MES oils, TDAE oils, glycerin esters (in other words, trioleates), hydrocarbon resins for plasticization having a glass transition temperature Tg preferably higher than 30°C, and mixtures of such compounds as non-aromatic or very slightly aromatic plasticizer. The preferred total amount of such a plasticizer is between 20 and 40 phr. Of these plasticizing hydrocarbon resins (the term "resin" is reserved by definition to solid compounds), homopolymers and copolymers of α-pinene, β-pinene, and dipentene; polylimonene; or a C5 fraction such as a resin formed from a C5 fraction/styrene copolymer. These components can be used alone or in combination with a plasticizing oil such as MES or TDAE oil.

In addition, for instance, an inactive filler such as clay, bentonite, talc, chalk, or kaolin particles (that is, a reinforcing filler) can also be added as appropriate and in accordance with the purpose of use with the above-mentioned reinforcing filler, that is, the non-black reinforcing filler (inorganic filler) and carbon black optional component.

Moreover, these compositions can contain, in addition to the above-mentioned coupling agent, non-black reinforcing filler coating agents (for instance, one containing only Y functional groups), as well as conventional auxiliary agents for improving the working properties of the composition in a green state by conventional methods, such as by improving the dispersibility of the non-black filler in a rubber matrix and reducing the viscosity of the composition. Examples of these chemicals are hydrolysable silanes such as alkyl alkoxy silane (for instance, alkyl triethoxysilane); polyols; polyethers (for instance, polyethylene glycols); primary, secondary or tertiary amines (such as trialkanolamines); and hydroxylated or hydrolysable POS, such as α,ω-dihydroxypolyorganosiloxanes (such as α,ω-dihydroxypolysiloxanes).

Next, the method described in a 2009 Japanese patent application filed by the present applicant (International Early Disclosure WO2010/146180 disclosed on October 23, 2010) is an example of the method for producing a tyre tread having flexible fences.

A preferred embodiment of the present invention will now be described while referring to the drawings.

First, the tread for a pneumatic tyre of an embodiment of the present invention will be described using Figures 1 through 3.

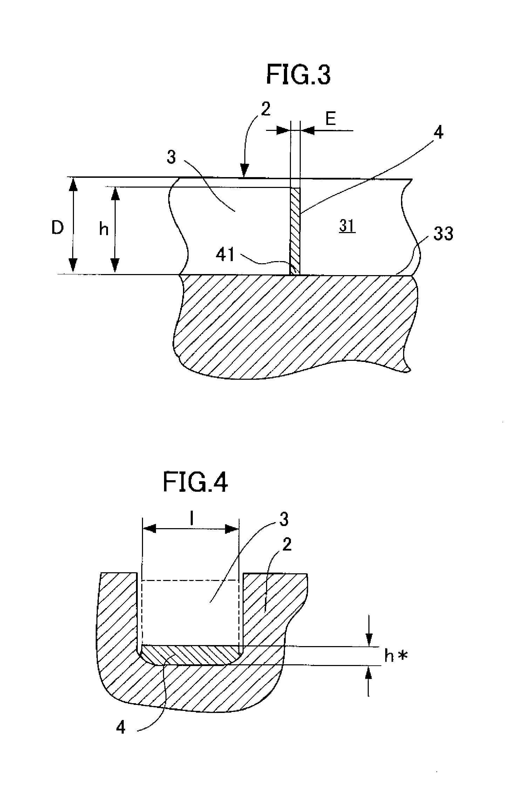

Figure 1 is a schematic drawing of the tread for a pneumatic tyre according to one embodiment of the present invention; Figure 2 is an enlarged cross section of a tread for a pneumatic tyre viewed along line II-II of Figure 1; and Figure 3 is an enlarged cross section of a tread for a pneumatic tyre viewed along line III-III of Figure 1.

First, as shown in Figure 1, reference 1 shows tread 1 for a pneumatic tyre according to the present invention, and tread 1 for the pneumatic tyre has a tread part 2 and flexible fences 4 that will be described later. Two main grooves 3 having width W are formed in the tread part 2 such that they extend in the tyre circumferential direction as shown by XX'. Each groove 3 has three surfaces, that is, opposing walls 31 and 32 and base (base part) 33. It should be noted that the tyre size in this example is 225/55R16, and the direction of tyre rotation of tread part 2 is not specified. In the present embodiment, the opposing walls 31 and 32 extend perpendicular to the tyre radial direction, width W is 14.5 mm, and groove depth D is 8.0 mm.

In this drawing, the tyre is filled to the rated internal pressure, and the drawing shows the tread section that contacts the ground 5 and the length L of the tread section that contacts the ground at this time. It should be noted that according to "ETRTO Standard Manual 2011," the applicable rim of this size is 7J, the rated internal pressure is 250 kPa, the rated load is 690 kg, and the length L of the section that contacts the ground in this embodiment is 143 mm.

Here, each main groove 3 that passes through the tread section that contacts the ground 5 forms an air column with the road surface while the tyre is rolling, and the resonant frequency of the main groove 3 is dependent on the length of the air column formed in this way. According to this embodiment, flexible fences 4 are disposed in main grooves 3 as shown in Figures 1 through 3 in order to vary the frequency of the air column resonance. As shown in Figure 1, the position interval P of each flexible fence 4 formed inside the same main groove 3 is shorter than the length L of the section that contacts the ground such that at least one flexible fence is always within the section 5 that contacts the ground of each groove 3.

Next, as shown in Figures 2 and 3, the flexible fence 4 is joined as illustrated at the foundation part 41 thereof to groove base 33 of main groove 3 and as shown in Figure 3, the flexible fence 4 is disposed such as to extend in the tyre radial direction (perpendicular to the tyre axis of rotation). Moreover, as shown in Figure 2, all of both sides 42 of flexible fence 4 other than the joined part (33) is disposed so that there is a predetermined space formed with opposing walls 31 and 32 of main groove 3.

As shown in Figure 1, flexible fences 4 are formed such as to extend perpendicular to the direction in which the main groove 3 extends. The flexible fence 4 has a rectangular cross section, and this rectangular cross section has width 1 (refer to Figure 2) and thickness E (refer to Figure 3). Thickness E of the flexible fences 4 is preferably 0.3 mm or greater and 1.0 mm or less.

Moreover, as shown in Figure 2, the flexible fences 4 are formed to a rectangular shape as viewed from the lengthwise direction of the main groove (as seen from the front), and have height h that is somewhat lower than depth D of main groove 3 as shown in Figures 2 and 3.

This flexible fence 4 is formed such that at least 70% of the cross sectional surface area of the main groove 3 is blocked, and is formed such that the fence collapses under the hydraulic pressure of a fluid, such as water, that is flowing through the main groove 3. According to the present embodiment, thickness E of the flexible fence 4 is 0.6 mm. Moreover, according to the present embodiment, with regard to the height h and width 1 of the flexible fence 4, as shown in Figure 2, the flexible fence is formed to a height h of 7.0 mm and width 1 of 13.5 mm versus a depth D of 8.0 mm and width W of 14.5 m of main groove 3 such that approximately 87% of the cross sectional surface area of the main groove 3 is blocked.

It should be noted that, for instance, in the example of the tyre of the present embodiment, the flexible fence 4 can be a rectangular shape having a height h of approximately 5.6 mm or greater such that approximately 70% of the cross sectional surface area of the main groove 3 is blocked. It should be noted that the width W and depth D of the tyre main groove 3 can be changed and the width 1 and height h of the flexible fence 4 can be accordingly changed and are not restricted to the example in the embodiment as long as at least 70% of the cross sectional surface area of main groove 3 is blocked.

According to the present embodiment, the flexible fence 4 is formed from a rubber composition for fences that is different from the tread 2, and the rubber composition for fences contains 30 phr or more of non-black reinforcing filler and photo-oxidation catalyst in order to produce a faster wear rate than the tread 2.

The flexible fence 4 formed from a rubber composition for fences to which an organic photo-oxidation catalyst has been added is exposed to visible light having a wavelength near that of the UV region in order to promote photo-oxidation of this rubber composition and produce a tread wear rate that is faster than that of the tread 2. This effect is obvious at the tip of the flexible fence that has a tendency towards being exposed to visible light in particular when the tyre is travelling or during storage.

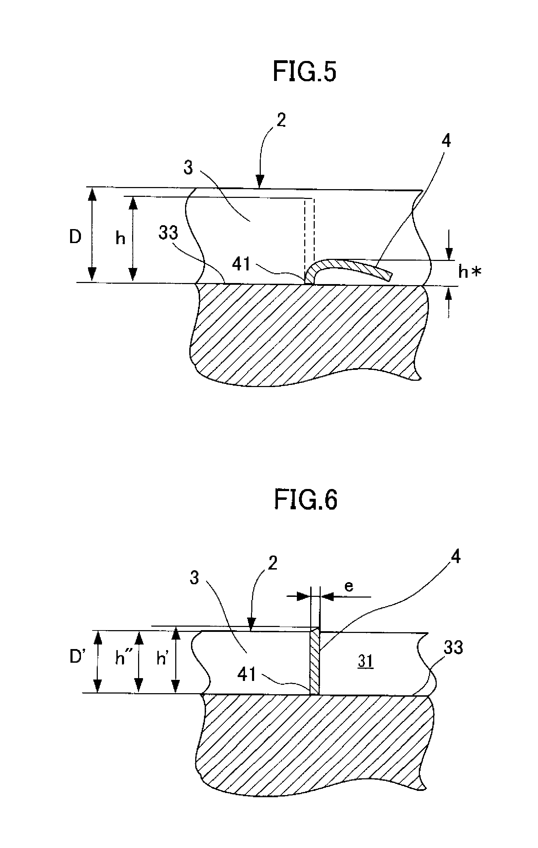

Next, the status when the tread for a pneumatic tyre of one embodiment is travelling on a wet road surface will be described with Figures 4 and 5.

Figure 4 is an enlarged view showing the tread for a pneumatic tyre as viewed along II-II in Figure 1 while travelling on a wet road surface, and Figure 5 is an enlarged view showing the tread for a pneumatic tyre as viewed along III-III in Figure 1 while travelling on a wet road surface

As shown in Figures 4 and 5, a flexible fence 4 formed from a rubber composition that is different from the tread 2 collapses or bends under the water pressure generated by a fluid such as water that passes through the main groove 2 when the tyre is travelling on a wet road surface. As a result, height of the fence decreases to h* and this reduction in height leads to opening of main groove 3 for the most part and secures water drainage.

Next, the status after tread wearing of the tread of the pneumatic tyre of one embodiment of the present invention will be described while referring to Figure 6.

Figure 6 is a cross section showing the tread of a pneumatic tyre viewed along III-III in Figure 1 when worn to a groove depth of approximately 30%.

Figure 6 shows the status when after travelling a specific distance, the groove depth D of the main groove 3 is worn to D' that is shallower than initial height h of flexible fence 4. The flexible fence 4 formed from a rubber composition for fences that is different from that of the tread 2 is, after running a specific distance, worn oblique at the tip that contacts the road surface, and this height is reduced from the original height h to h' on the high side and h" on the low side such that height h" on the low side is the same as depth D' of the main groove 3.

It should be noted that as long as a modified example of the present embodiment has the above-mentioned effect, the rubber composition for fences can be used for a portion (for instance, the joining part (33) (refer to Figures 2 and 3), or all (not illustrated), of the base 33 of the main groove 3 to which the flexible fence 4 is joined. In such a case, not only the flexible fence 4 but also the base part 33 of the main groove 3 is formed from the same rubber composition for fences and the production steps can thereby be simplified.

Moreover, it should be noted that as long as a modified example of the present embodiment has the above-mentioned effect, the flexible fences 4 formed from a rubber composition for fences can be formed divided into multiple parts, or they can be formed by jointing one or both opposing walls 31 and 32 of the main groove 3 such that they extend in the direction of groove width, or a combination of flexible fences joined to the walls 31 and 32 and flexible fences 4 joined to the base 33 of the main groove 3 can also be formed (not illustrated).

The rubber composition for fences and the rubber composition that forms the tread part are preferably produced using two connecting production steps well-known to a person skilled in the art, preferably inside the appropriate mixture. That is, they are produced using a first step for thermomechanical working or mixing at a high maximum temperature between 110 and 190°C, preferably 130 to 180°C, and then a second mechanical step (called the "production" step) at a temperature lower than 110°C, for instance, a low temperature between 40 and 100°C. A crosslinking agent is added during this finishing step (production step).

The method for producing a rubber composition for fences comprises, for instance, at least the following steps:
A step whereby in a first (non-production) step, thermomechanical mixing to a maximum temperature between 100 and 190°C is performed one or more times while or after mixing at least one of a reinforcing filler and organic photo-oxidation catalyst with a diene elastomer;
a step for cooling the mixture to a temperature lower than 100°C;
then a step whereby in a second (production) step, a crosslinking system is added; and
a step for mixing the mixture to a maximum temperature lower than 110°C.

According to one example, the above-mentioned non-production step is performed during one thermomechanical mixing step and during that step, first all of the essential base components (diene elastomer, organic photo-oxidation catalyst, reinforcing filler and coupling agent as necessary, and plasticizer) are introduced to an appropriate mixer such as a standard closed mixer and second, after mixing for one to two minutes, additives other than the crosslinking system and coating agent and auxiliary additives as optional components are introduced. The total mixing time during this non-production step is, for instance, one to 15 minutes.

Once the mixture obtained in this way is cooled, it is immediately introduced to an open mixer such as an open mill kept at a low temperature (such as between 40 and 100°C). Then the mixture is mixed for several minutes, for instance, 2 to 15 minutes (production step).

The crosslinking system is a crosslinking system based on preferably sulphur and accelerator.

It is possible to use any compound capable of acting as a diene elastomer vulcanization accelerator in the presence of sulphur, particularly a compound selected from the group consisting of 2-mercaptobenzothiazoldisulphide (abbreviated as "MBTS"), N,N-dicyclohexyl-2-benzothiazylsulphide (abbreviated as "DCBS"), N-tert-butyl-2-benzothiazylsulphenamide) (abbreviated "TBBS"), N-tert-butyl-2-benzothiazyl sulphenimide (abbreviated "TBSI"), and mixtures of these compounds. A sulphonamide primary accelerator is preferred.

Various well-known secondary accelerators or vulcanization activators, such as zinc oxide, stearic acid, or quinidine derivative (particularly diphenyl guanidine) can be added to the vulcanization system during the non-production step and/or the production step. The amount of sulphur is, for instance between 0.5 and 3.0 phr, and the primary accelerator content is between 0.5 and 5.0 phr.

The final composition obtained in this way is then, for instance, calendered into sheet or plaque form or extruded into a rubber shaped element for use as a tyre tread, for instance.

The above-mentioned was a particularly preferred example of the present invention, but the present invention is not restricted to the embodiments in the drawings and can be modified to a variety of embodiments.

### Key

1 Tread for pneumatic tyre
2 Tread part
3 Main groove
31 Opposing wall of main groove
32 Opposing wall of main groove
33 Base of main groove
4 Flexible fence
41 Foundation of flexible fence (connected with groove base 33 of main groove 3)
42 Side on both sides of flexible fence 4
5 Tread section that contacts ground

## Claims

1. Tread (1) for a pneumatic tyre that comes into contact with the road surface while the tyre is rolling and that is formed from a rubber composition, the tread (1) for a pneumatic tyre being **characterized in** comprising:
a tread part (2) in which is formed at least one main groove (3) having a base (33) and 2 opposing side walls (31, 32) and depth D and width W and
multiple flexible fences (4) that have thickness E, extending within the main groove (3) such that at least 70% of the cross sectional surface area of the main groove (3) is blocked, and are disposed at intervals such that when the tyre is rolling at least one flexible fence (4) is present in the main groove (3) in the tread section that contacts the ground,
wherein the multiple flexible fences (4) are formed from at least a rubber composition for fences that is different from the rubber composition for the tread part (2), and the rubber composition for fences comprises a filler composition the base of which is
(a) diene elastomer;
(b) 30 phr or more of non-black reinforcing filler and less than 3 phr of carbon black as optional component; and
(c) organic photo-oxidation catalyst.

2. Tread (1) for a pneumatic tyre according to Claim 1, **characterized in that** the diene elastomer is selected from the group consisting of polybutadienes, polyisoprenes, natural rubbers, butadiene copolymers, isoprene copolymers, and mixtures of these elastomers.

3. Tread (1) for a pneumatic tyre according to Claim 1 or Claim 2, **characterized in that** the organic photo-oxidation catalyst is particles, preferably microparticles.

4. Tread (1) for a pneumatic tyre according to any 1 of Claims 1 through 3, **characterized in that** the organic photo-oxidation catalyst is selected from the group consisting of radical-type or cation-type photoinitiators.

5. Tread (1) for a pneumatic tyre according to Claim 4, **characterized in that** the organic photo-oxidation catalyst is a cation-type photoinitiator.

6. Tread (1) for a pneumatic tyre according to Claim 5, **characterized in that** the cation-type photoinitiator is an onium salt.

7. Tread (1) for a pneumatic tyre according to Claim 4, **characterized in that** the organic photo-oxidation catalyst is a radical-type photoinitiator.

8. Tread (1) for a pneumatic tyre according to Claim 7, **characterized in that** the radical-type photoinitiator is aromatic ketone.

9. Tread (1) for a pneumatic tyre according to Claim 8, **characterized in that** the aromatic ketone is selected from the group consisting of benzylketals, benzoins, α,α-dialkoxyacetophenones, α-hydroxyalkylphenones, α-aminoalkylphenones, acylphosphinoxides, benzophenone or thioxanthone with a hydrogen donor, and mixtures of these compounds.

10. Tread (1) for a pneumatic tyre according to any 1 of Claims 1 through 9, **characterized in that** the amount of organic photo-oxidation catalyst is between 0.1 phr and 10 phr, preferably between 0.15 phr and 5 phr, further preferably between 0.2 phr and 2 phr.

11. Tread (1) for a pneumatic tyre according to any 1 of Claims 1 through 10, **characterized in that** the amount of carbon black as optional component is less than 2 phr, preferably less than 1 phr.

12. Tread (1) for a pneumatic tyre according to any 1 of Claims 1 through 11, **characterized in that** the non-black reinforcing filler is an inorganic, non-black reinforcing filler.

13. Tread (1) for a pneumatic tyre according to Claim 12, **characterized in that** the inorganic, non-black reinforcing filler is selected from the group consisting of silica, alumina, aluminosilicate, and mixtures of these fillers.

14. Tread (1) for a pneumatic tyre according to any 1 of Claims 1 through 13, **characterized in that** the amount of non-black reinforcing filler is between 20 and 120 phr, preferably between 30 and 100 phr, more preferably between 40 and 90 phr.

15. Tread (1) for a pneumatic tyre according to any 1 of Claims 1 through 14, **characterized in that** the thickness E of the flexible fences (4) is 0.3 or greater to 1.0 mm or less.

16. Pneumatic tyre, **characterized in** having the tread (1) according to any 1 of Claims 1 through 15.
